# EUROPÄISCHE PATENTSCHRIFT

(11) **EP 0 630 452 B1**
(45) Veröffentlichungstag und Bekanntmachung des Hinweises auf die Patenterteilung: **06.09.1995**
(21) Anmeldenummer: 93905076.1
(22) Anmeldetag: 11.03.1993
(51) Int. Cl.: F16K 31/06, F15B 13/044

(54) **PROPORTIONAL-WEGEVENTIL**
PROPORTIONAL DISTRIBUTING VALVE
DISTRIBUTEUR PROPORTIONNEL

(30) Priorität: 12.03.1992 AT 492/92
(43) Veröffentlichungstag der Anmeldung: 28.12.1994
(73) Patentinhaber: HOERBIGER VENTILWERKE AKTIENGESELLSCHAFT, 1110 Wien (AT)
(72) Erfinder: HUBER, Gerhard, D-8951 Frankenhofen (DE)
(74) Vertreter: Pinter, Rudolf, Dipl.-Ing.
(86) Internationale Anmeldenummer: AT9300044
(87) Internationale Veröffentlichungsnummer: WO9318327

(56) Entgegenhaltungen:
- EP-A- 0 088 357
- CH-A- 530 564
- DE-A- 3 147 771
- DE-A- 3 817 110
- FR-A- 1 477 024
- FR-A- 2 301 752
- GB-A- 1 093 494
- US-A- 4 886 091

## Beschreibung

### Technisches Gebiet

Die Erfindung betrifft ein Proportional-Wegeventil, mit einem in einer Bohrung eines Gehäuses axial beweglichen Venitikolben, der mit gehäuseseitigen Steueröffnungen zusammenwirkende Steuerkanten aufweist, und mit einer seitlich am Gehäuse koaxial zum Ventilkolben angebrachten elektromagnetischen Betätigungseinheit, welche einseitig mit steuerbarer Kraft auf den auf der anderen Seite über eine relativ zum Gehäuse an einer Anlage abgestützte Federeinrichtung belasteten Ventilkolben einwirkt, wobei die beiden Endstellungen des Ventilkolbens durch relativ zum Gehäuse festliegende, mit dem Ventilkolben zusammenwirkende Anschläge bestimmt sind.

### Stand der Technik

Derartige Proportional-Wegeventile sind bekannt (siehe beispielsweise EP-A1 88 357) und werden üblicherweise zum stufenlosen Ändern des Volumenstromes eines hydraulischen bzw. pneumatischen Steuer- bzw. Arbeitsmediums entsprechend der Stellung des Ventilkolbens verwendet. Besonders die genannte Ausbildung mit einseitig wirkender Betätigungseinrichtung hat zufolge ihres geringen Platzbedarfes und der preiswerten Konstruktion vielfach Anwendung gefunden; nur als ein Beispiel sei hier die Verwendung für eine hydraulische Nockenwellenverstellung in Kraftfahrzeugen genannt. Problematisch bei allen bekannten Ausführungen derartiger Ventile ist die im einzelnen relativ unbestimmte Steuercharakteristik - darunter soll hier die tatsächliche Einflußnahme des Ventils auf den Volumenstrom des gesteuerten Mediums bei bestimmten auf den Ventilkolben wirkenden Betätigungskräften verstanden werden - da für viele Anwendungsfälle nicht nur Endstellungen mit einem definierten Volumenstrom, sondern auch eine definierte Mittelstellung bei einer bestimmten Betätigungskraft unerläßlich sind, insbesonders dann, wenn mit geschlossenen Regelschleifen gearbeitet wird. Aus der oben genannten Schrift ist in diesem Zusammenhang eine Ausführung bekannt, bei der die Endstellungen mittels über Gewinde verstellbaren Anschlägen justiert werden können.

### Darstellung der Erfindung

Aufgabe der vorliegenden Erfindung ist es, ein Proportional-Wegeventil der eingangs genannten Art so zu verbessern, daß die genannten Nachteile vermieden werden und daß insbesonders mit einfachen Mitteln der Verwendungsbereich derartiger Ventile auch auf derartige Einsatzgebiete ausgedehnt werden kann, bei denen eine definierte Steuercharakteristik unerläßlich ist.

Diese Aufgabe wird bei einem Proportional-Wegeventil der eingangs genannten Art dadurch gelöst, daß zur definierten Festlegung des Zusammenhanges zwischen Größe der Betätigungskraft und Stellung des Ventilkolbens die Anlage der Federeinrichtung einstellbar ist und daß der Ventilkolben an der Seite der Betätigungseinheit einen außerhalb der Bohrung im Gehäuse liegenden, gegenüber dieser verdickten Bundbereich aufweist, dessen innere Schulter einen inneren Endanschlag am Gehäuse und dessen äußere Schulter einen äußeren Endanschlag an der Betätigungseinheit bildet. Damit sind die beiden Endstellungen des Ventilkolbens, die zusammen mit den entsprechenden Steueröffnungen bzw. -kanten auch den in dieser Endstellung vorliegenden Volumenstrom definieren, sehr einfach und genau entsprechend den jeweiligen Anforderungen festgelegt - die Bemaßung und Tolerierung der zusammenwirkenden Öffnungen bzw. Steuerkanten kann auf einfachste Weise von den jeweils zusammenwirkenden Anschlägen aus vorgenommen werden, sodaß mit minimalsten Abweichungen bei der Herstellung und Montage des Ventils gerechnet werden kann. Im Mittelbereich der Steuercharakteristik zwischen den definierten Endstellungen ist der Zusammenhang zwischen Größe der Betätigungskraft und Stellung des Ventikolbens über die Anlage der Federeinrichtung einstellbar, sodaß einem ganz bestimmten Stromwert auch eine ganz bestimmte Steuerstellung des Ventilkolbens zugeordnet werden kann.

Die beschriebene Ausführung ergibt einen relativ einfach herzustellenden Ventilkolben mit mit dem Gehäuse zusammenwirkenden Anschlägen für die beiden Endstellungen, wobei der Ventilkolben samt Bundbereich von der Seite der abgenommenen Betätigungseinheit her in das Gehäuse eingesetzt werden kann.

Besonders bevorzugt ist im letztgenannten Zusammenhang eine weitere Ausgestaltung der Erfindung, gemäß welcher der Bundbereich des Ventilkolbens in einer konzentrischen Ausnehmung des Gehäuses bzw. der Betätigungseinheit angeordnet ist, deren Tiefe um den Verstellweg des Ventilkolbens größer als die Bundbreite zwischen den Schultern ist. Damit ergibt sich eine in axialer Richtung relativ klein bauende Konstruktion, bei der der Bundbereich des Ventilkolbens in dem üblicherweise ohnedies nicht nutzbaren Raum vor dem Magneten der Betätigungseinheit untergebracht ist. Der Verstellweg bzw. die beiden Endstellungen des Ventilkolbens sind nur aus der Zusammenwirkung von Bundbreite und Tiefe der konzentrischen Ausnehmung bzw. der Toleranzen dieser Maße bestimmt, was sehr leicht eine genaue Zurverfügungstellung der gewünschten Endstellungen ermöglicht.

Der verdickte Bundbereich kann nach einer anderen bevorzugten Weiterbildung der Erfindung als separater Bauteil ausgebildet und mit dem im wesentlichen mit zylindrischer Außenkontur ausgebildeten Steuerbereich des Ventilkolbens verbunden, vorzugsweise verpreßt oder verschraubt, sein. Damit kann sowohl der Bundbereich als auch der Steuerbereich des Ventilkolbens separat als im wesentlichen zylindrischer Teil hergestellt und bearbeitet werden (z.B. durch Schleifen), wonach die beiden Teile zusammengebaut und in das Gehäuse eingesetzt werden können.

Die Anlage der Federeinrichtung ist nach einer anderen Weiterbildung der Erfindung an der bezüglich des Ventilkolbens innen gelegenen Seite einer einstellbar einschraub- bzw. einpreßbaren Stelleinrichtung angeordnet. Über diese Stelleinrichtung kann bei einer anfänglichen bzw. auch Zwischendurch-Justierung des Wegeventils sehr leicht beispeilsweise eine definierte Mittelstellung des Ventilkolbens bei halbem Nennstrom des Magneten in der Betätigungseinrichtung eingestellt werden, was eine einfache Eliminierung von Magnetkrafttoleranzen, Federkrafttoleranzen und Fertigungstoleranzen ermöglicht.

Bei einem Porportional-Wegeventil mit zumindest zwei bezüglich der Steuer- bzw. Regelkanten jeweils außen liegenden Tankabsteuerungen ist in weiterer Ausgestaltung der Erfindung vorgesehen, daß die bundseitige Tankabsteuerung über Verbindungsöffnungen im von der Seite der Federeinrichtung her hohl ausgeführten Ventilkolben verläuft und mit dem an der Seite der Federeinrichtung gehäuseseitig angeordneten Tankanschluß in Verbindung steht. Damit erspart man sich eine weitere Gehäuseöffnung im Bundbereich des Ventilkolbens samt der erforderlichen Zuleitungsbohrung und Anschlußamaturen, was die Gesamtanordnung einfacher und axial kürzer bauend macht.

### Kurze Beschreibung der Zeichnung

Die Erfindung wird im folgenden noch anhand des in der Zeichnung schematisch dargestellten Ausführungsbeispiels näher erläutert, wobei
Fig. 1 einen Axialschnitt durch ein entsprechendes Proportional-Wegeventil in der in der Darstellung rechten Endstellung des Ventilkolbens und
Fig. 2 in der linken Endstellung des Ventilkolbens zeigt.

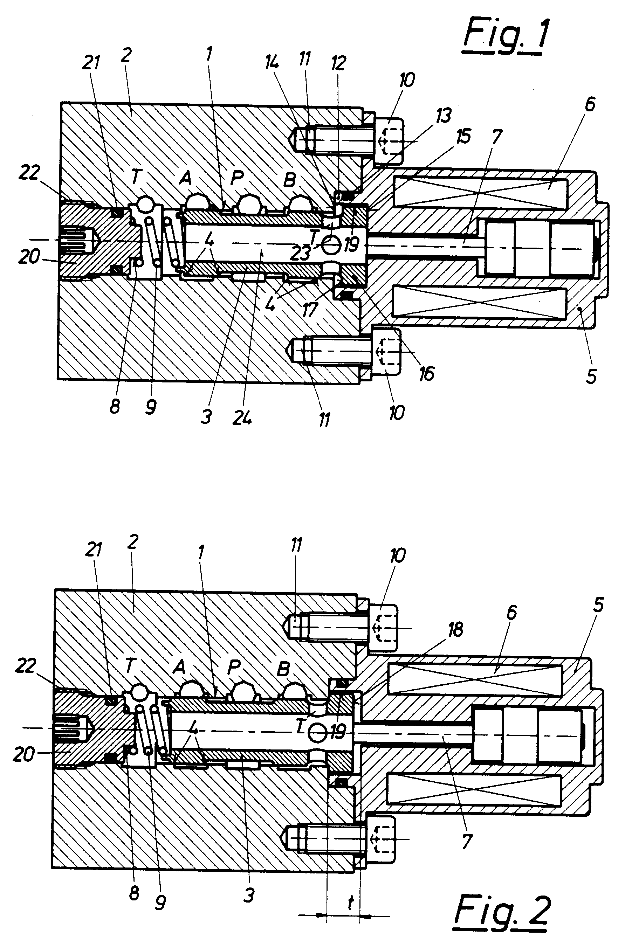

Das in den Fig. 1 und 2 in verschiedenen Schaltstellungen dargestellte Proportional-Wegeventil weist einen in einer Bohrung 1 eines Gehäuses 2 axial beweglichen Ventilkolben 3 auf, der mit gehäuseseitigen Regelkanten (den Anschlüssen A, P, B zugeordnet) zusammenwirkende Steuerkanten 4 trägt. Weiters ist für den Ventilkolben 3 eine Betätigungseinrichtung 5 vorgesehen, welche einseitig mittels eines Elektromagneten 6 mit steuerbarer Kraft über einen Stempel 7 auf den auf der anderen Seite über eine relativ zum Gehäuse 2 an einer Anlage 8 abgestützte Federeinrichtung 9 belasteten Ventilkolben 3 einwirkt.

Die elektromagnetische Betätigungseinrichtung 5 ist hier von rechts her seitlich mittels Schrauben 10 in entsprechenden Gewindebohrungen 11 des Gehäuses 2 befestigt, wobei eine axiale Zentrierung über einen konzentrischen Ringansatz 12 erfolgt, der außen eine Dichtung 13 trägt. Die beiden Endstellungen des Ventilkolbens 3 (wie sie in Fig. 1 einerseits und Fig. 2 andererseits dargestellt sind) sind durch relativ zum Gehäuse 2 festliegende, mit dem Ventilkolben 3 zusammenwirkende Anschläge 14, 15 bestimmt. Der Ventilkolben 3 weist dabei an der Seite der Betätigungseinheit 5 einen außerhalb der Bohrung 1 im Gehäuse 2 liegenden, gegenüber dieser verdickten Bundbereich 16 auf, dessen innere Schulter 17 einen inneren Endanschlag am Gehäuse 2 und dessen äußere Schulter 18 einen äußeren Endanschlag an der Betätigungseinheit 5 bildet. Der Bundbereich 16 des Ventilkolbens 3 ist hier in einer konzentrischen Ausnehmung 19 des Ringansatzes 12 der Betätigungseinrichtung 5 angeordnet, deren Tiefe t (siehe Fig. 2) um den Verstellweg des Ventilkolbens 3 größer als die Bundbreite zwischen den Schultern 17 und 18 ist.

Die Anlage 8 der Federeinrichtung 9 ist an der bezüglich des Ventilkolbens 3 innen gelegenen Seite einer einstellbar einschraubbaren Stelleinrichtung 20 angeordnet, welche über einen Dichtring 21 abgedichtet durch Verdrehung in ihrem Gewinde 22 in axialer Richtung verstellt bzw. eingestellt werden kann, womit die Vorspannkraft der Federeinrichtung 9 auf einfache Weise beeinflußbar ist. Abgesehen von der dargestellten Schraubverstellung wäre aber natürlich auch eine unterschiedlich einpreßbare Stelleinrichtung möglich.

Die dargestellte Ventilausführung weist weiters zwei in der Reihe der den Anschlußöffnungen A, P, B zugeordneten Regelkanten jeweils außenliegende Tankabsteuerungen auf, von denen die bundseitige über Verbindungsöffnungen 23 im von der Seite der Federeinrichtung 9 her hohl ausgeführten Ventilkolben 3 verläuft und über den hohlen Ventilkolben 3 auch mit dem an der Seite der Federeinrichtung 9 gehäuseseitig angeordneten Tankanschluß T in Verbindung steht.

Anstelle der dargestellten einstückigen Ausführung des verdickten Bundbereiches 16 mit dem Ventilkolben 3 könnte dieser Bundbereich 16 auch als separater Bauteil ausgebildet und mit dem im wesentlichen mit zylindrischer Außenkontur ausgebildeten Steuerbereich des Ventilkolbens verbunden, vorzugsweise verpreßt oder verschraubt, sein.

Bei unbestromtem Elektromagneten 6 liegt der Ventilkolben 3 mit der äußeren Schulter 18 des Bundbereiches 16 am Boden der Ausnehmung 19 der Betätigungseinrichtung 5 an, da die Federeinrichtung 9 ihn nach rechts drückt, wie dies in Fig. 1 dargestellt ist. In dieser Steuerstellung fließt der Volumenstrom vom Anschluß P nach B und von A nach T. Wird nun die Spule des Elektromagneten 6 von Strom durchflossen, so bewegt sich der Ventilkolben 3 in Abhängigkeit von Strom nach links, so weit bis bei maximalem Strom entsprechend Fig. 2 die linke bzw. innere Schulter 17 am entsprechenden Anschlag 14 am Gehäuse 2 anliegt. In dieser Steuerstellung ist P nach A und B nach T geöffnet. Der Ventilkolben 3 passiert bei halbem Nennstrom die Ventilmittelstellung, in der je nach Auslegung alle vier Anschlüsse verbunden oder aber abgesperrt sind - diese Steuerstellung ist hier nicht separat dargestellt. Mittels der Stelleinrichtung 20 kann die erforderliche Kraft für die geforderte Ventilmittelstellung genau eingestellt werden, wodurch Magnetkrafttoleranzen, Federkrafttoleranzen und Fertigüngstoleranzen eliminiert bzw. in ihrer Auswirkung minimiert werden können. In der Praxis wird dazu das Ventil voreingestellt, wonach die Ventilkurve gefahren wird. Liegt diese nicht im geforderten Bereich so wird mit der Stelleinrichtung 20 die Kurve bzw. Kennlinie in die geforderte Lage verschoben, wonach die Stelleinrichtung auf geeignete Weise (beispielsweise verkleben) gegen Verdrehen gesichert wird.

Der Ventilkolben 3 besitzt als Anschläge gegen das Gehäuse 2 bzw. die Betätigungseinrichtung 5 hier die Schultern des genannten Bundbereiches. Wie erwähnt liegt der Ventilkolben damit bei unbestromtem Elektromagneten 6 an der Betätigungseinrichtung 5 an. Die geöffnete Ventilfläche für die Verbindung von P nach B und A nach T ist in dieser Stellung nur von wenigen Toleranzen abhängig, womit eine definierte Menge des zu steuernden Mediums durch die entsprechenden Querschnitte fließt, die nur sehr geringe Abweichungen aufweisen kann. Ebenso liegt andererseits der Ventilkolben 3 bei maximal bestromtem Elektromagneten 6 am gehäuseseitigen Anschlag an, wobei auch in dieser Endstellung die Öffnungsflächen zwischen den zusammengehörigen Anschlüssen definiert sind.

Die Sicherstellung eines definierten Volumenstromes bei den beiden Endanschlägen kann für viele Anwendungsfälle sehr wichtig werden - so z.B. beim Einsatz in Kraftfahrzeugen, da bei zu großem Volumenstrom des auch als Schmiermittel verwendeten Hydraulikmediums der Schmierdruck im System zu niedrig wird und bei zu geringem Volumenstrom die Schmierung selbst nicht mehr ausreicht.

Die Steuer- bzw. Regelkanten am Ventilkolben 3 werden bei der Ausführung nach der Darstellung vorteilhaft vom Bundbereich 16 aus bemaßt und toleriert. Die Steuer- bzw. Regelkanten am Gehäuse 2 werden vom Gehäusenullpunkt aus bemaßt und toleriert, wobei die Betätigungseinheit 5 mit dem Magnetnullpunkt direkt am Gehäusenullpunkt anliegt, sodaß sich diesbezüglich keine Probleme hinsichtlich der Toleranzen ergeben.

Die dargestellte Konstruktion baut axial relativ kurz, insbesonders da der Bundbereich 16 des Ventilkolbens 3 in dem sowieso ansonsten nicht nutzbaren Raum vor der Betätigungseinrichtung 5 untergebracht ist. Das Ventil benötigt weiters auch nur einen Tankanschluß, da das von B abfließende Öl über die quergebohrten Verbindungsöffnungen 23 und weiters durch die axiale Bohrung 24 im Ventilkolben 3 zum Tankanschluß T abströmen kann.

## Patentansprüche

1. Proportional-Wegeventil, mit einem in einer Bohrung (1) eines Gehäuses (2) axial beweglichen Ventilkolben (3), der mit gehäuseseitigen Steueröffnungen (A,B,P,T) zusammenwirkende Steuerkanten (4) aufweist, und mit einer seitlich am Gehäuse (2) koaxial zum Ventilkolben (3) angebrachten elektromagnetischen Betätigungseinheit (5), welche einseitig mit steuerbarer Kraft auf den auf der anderen Seite über eine relativ zum Gehäuse (2) an einer Anlage (8) abgestützte Federeinrichtung (9) belasteten Ventilkolben (3) einwirkt, wobei die beiden Endstellungen des Ventilkolbens (3) durch relativ zum Gehäuse (2) festliegende, mit dem Ventilkolben (3) zusammenwirkende Anschläge (14, 15) bestimmt sind, **dadurch gekennzeichnet**, daß zur definierten Festlegung des Zusammenhanges zwischen Größe der Betätigungskraft und Stellung des Ventilkolbens (3) die Anlage (8) der Federeinrichtung (9) einstellbar ist und daß der Ventilkolben (3) an der Seite der Betätigungseinheit (5) einen außerhalb der Bohrung (1) im Gehäuse (2) liegenden, gegenüber dieser verdickten Bundbereich (16) aufweist, dessen innere Schulter (17) einen inneren Endanschlag (14) am Gehäuse (2) und dessen äußere Schulter (18) einen äußeren Endanschlag (15) an der Betätigungseinheit (5) bildet.

2. Proportional-Wegeventil nach Anspruch 1, dadurch gekennzeichnet, daß der Bundbereich (16) des Ventilkolbens (3) in einer konzentrischen Ausnehmung (19) des Gehäuses (2) bzw. der Betätigungseinheit (5) angeordnet ist, deren Tiefe (t) um den Verstellweg des Ventilkolbens (3) größer als die Bundbreite zwischen den Schultern (17, 18) ist.

3. Proportional-Wegeventil nach Anspruch 1 oder 2, dadurch gekennzeichnet, daß der verdickte Bundbereich (16) als separater Bauteil ausgebildet und mit dem im wesentlichen mit zylindrischer Außenkontur ausgebildeten Steuerbereich des Ventilkolbens (3) verbunden, vorzugsweise verpreßt oder verschraubt, ist.

4. Proportional-Wegeventil nach einem der Ansprüche 1 bis 3, dadurch gekennzeichnet, daß die Anlage (8) der Federeinrichtung (9) an der bezüglich des Ventilkolbens (3) innen gelegenen Seite einer einstellbar einschraub- bzw. einpressbaren Stelleinrichtung (20) angeordnet ist.

5. Proportional-Wegeventil nach einem der Ansprüche 1 bis 4, dadurch gekennzeichnet daß es zumindest zwei bezüglich der Steuer- bzw. Regelkanten jeweils außen liegenden Tankabsteuerungen aufweist, und daß die bundseitige Tankabsteuerung über Verbindungsöffnungen (23) im von der Seite der Federeinrichtung (9) her hohl ausgeführten Ventilkolben (3) verläuft und mit dem an der Seite der Federeinrichtung (9) gehäuseseitig angeordneten Tankanschluß (T) in Verbindung steht.

## Claims

1. A proportional distributing valve, with a valve spool (3) which is axially displaceable inside a bore (1) in a casing (2) and has control edges (4) co-operating with control openings (A, B, P, T) in the casing, and with an electromagnetic actuating unit (5) which is positioned laterally on the casing (2) coaxially with the valve spool (3), and acts with controllable force on one end of the valve spool (3), the other end thereof being loaded by a spring device (9) supported relative to the casing (2) on a supporting surface (8), the two final positions of the valve spool (3) being determined by stop devices (14, 15) which are fixed in relation to the casing (2) and co-operate with the valve spool (3), **characterised in that** for specific establishment of the correlation between the size of the actuating force and the position of the valve spool (3), the supporting surface (8) of the spring device (9) is adjustable, and at the actuation unit side the valve spool (3) has a collar region (16) which is located outside the bore (1) in the casing (2) and is widened in comparison therewith, the inner shoulder (17) of the said collar region forming an inner final stop device (14) on the casing (2) and the outer shoulder (18) of the said collar region forming an outer final stop device (15) on the actuation unit (5).

2. A proportional distributing valve in accordance with claim 1, **characterised in that** the collar region (16) of the valve spool (3) is arranged in a recess (19) concentric therewith in the casing (2) or the actuating unit (5), the depth (t) of the said recess being greater by the displacement path of the valve spool (3) than the width of the collar between the shoulders (17, 18).

3. A proportional distributing valve in accordance with claim 1 or 2, **characterised in that** the widened collar region (16) is formed as a separate component and is connected, preferably pressed or screwed, to the control region of the valve spool (3), the said region being formed substantially with a cylindrical outline.

4. A proportional distributing valve in accordance with one of claims 1 to 3, **characterised in that** the supporting surface (8) for the spring device (9) is arranged on the inner side - relative to the valve spool (3) - of an adjusting device (20) which can be adjustably screwed in or pressed in.

5. A proportional distributing valve in accordance with one of claims 1 to 4, **characterised in that** it has at least two controllable drainage paths to the tank, each located externally with regard to the control or adjustment edges, and the drainage path at the collar end extends via connecting openings (23) in the valve spool (3) - which is formed to be hollow from the end adjacent the spring device (9) - and is connected to the tank connection (T) arranged on the casing at the end adjacent the spring device (9).

## Revendications

1. Distributeur proportionnel comportant un piston de soupape (3) déplaçable axialement dans un alésage (1) d'un boîtier (2), ledit piston présentant des arêtes de pilotage (4) coopérant avec des ouvertures de commande (A, B, P, T) du côté du boîtier, et comportant une unité d'actionnement (5) éléctromagnétique montée coaxialement au piston de soupape, latéralement sur le boîtier (2), unité qui agit d'un côté avec force commandable sur le piston de soupape (3) sollicité de l'autre côté par l'intermédiaire d'un dispositif de ressort (9) en appui sur un point d'appui (8) par rapport au boîtier (2), les deux positions extrêmes du piston de soupape (3) étant déterminées par des butées (14, 15) stationnaires par rapport au boîtier (2), coopérant avec le piston de soupape (3), caractérisé en ce que pour définir le rapport entre l'amplitude de la force d'actionnement et la position du piston de soupape (3), la point d'appui (8) du dispositif de ressort (9) est réglable, et en ce que le piston de soupape (3) présente sur le côté de l'unité d'actionnement (5) une collerette (16) située à l'extérieur de l'alésage (1) dans le boîtier (2), renflée par rapport à celui-ci, dont l'épaulement (17) intérieur forme une butée (14) d'extrémité intérieure sur le boîtier et l'épaulement (18) extérieur forme une butée (15) d'extrémité extérieure sur l'unité d'actionnement. (5).

2. Distributeur proportionnel selon la revendication 1, caractérisé en ce que la collerette (16) du piston de soupape (3) est agencée dans un évidement (19) concentrique du boîtier (2) ou de l'unité d'actionnement (5), respectivement, évidement dont la profondeur (t) est supérieure à la largeur de collerette entre les épaulements (17, 18), de la valeur du trajet de réglage du piston de soupape (3).

3. Distributeur proportionnel selon l'une ou l'autre des revendications 1 et 2, caractérisé en ce que la collerette (16) renflée peut être réalisée sous la forme d'un composant séparé et qu'elle peut être reliée, de préférence mise à la presse ou vissée, avec la région de commande du piston de soupape (3) qui est réalisée sensiblement avec un contour extérieur cylindrique 3.

4. Distributeur proportionnel selon l'une quelconque des revendications 1 à 3, caractérisé en ce que le point d'appui (8) du dispositif de ressort (9) est agencé sur le côté, situé à l'intérieur par rapport au piston de soupape (3), d'un dispositif de réglage (20) qui peut être enfoncé ou vissé de manière réglable.

5. Distributeur proportionnel selon l'une quelconque des revendications 1 à 4, caractérisé en ce qu'il comprend au moins deux commandes de réservoir situées respectivement à l'extérieur par rapport aux arêtes de pilotage ou de réglage et en ce que la commande de réservoir qui est du côté de la collerette s'étend par l'intermédiaire d'ouvertures de liaison (23) dans le piston de soupape (3), réalisé creux depuis le côté du dispositif de ressort (9), et se trouve en liaison par l'intermédiaire du piston de soupape (3) aussi avec le raccordement de réservoir (T) agencé du côté du boîtier sur le côté du dispositif de ressort (9).
